# EUROPEAN PATENT SPECIFICATION

(11) **EP 3 056 085 B1**
(45) Date of publication and mention of the grant of the patent: **31.10.2018**
(21) Application number: 14840772.9
(22) Date of filing: 21.08.2014
(51) Int. Cl.: A01N 63/02, A01M 29/12, A01P 17/00

(54) **REPELLANT FOR REPELLING ROOT-KNOT NEMATODES, METHOD FOR MANUFACTURING SAME AND REPELLING METHOD USING REPELLANT**
ABWEHRMITTEL ZUR BEKÄMPFUNG VON WURZELGALLENNEMATODEN, VERFAHREN ZUR HERSTELLUNG DAVON UND BEKÄMPFUNGSVERFAHREN MIT DEM ABWEHRMITTEL
RÉPULSIF SERVANT À REPOUSSER LES NÉMATODES À GALLES, PROCÉDÉ POUR SA FABRICATION ET PROCÉDÉ DE RÉPULSION UTILISANT LE RÉPULSIF

(30) Priority: 26.08.2013 JP 2013174827
(43) Date of publication of application: 17.08.2016
(73) Proprietor: Sophia School Corporation, Tokyo 1028554 (JP)
(72) Inventor: SAITO, Tamao, Tokyo 102-8554 (JP); BARTLEM, Derek, Sapporo-shi Hokkaido 060-0808 (JP)
(74) Representative: Kuhnen & Wacker Patent- und Rechtsanwaltsbüro PartG mbB
(86) International application number: PCT/JP2014/071892
(87) International publication number: WO 2015/029872

(56) References cited:
- JP-A- H03 152 299
- JP-A- S52 128 394
- JP-A- 2010 241 738
- JP-A- 2011 068 612
- RICHARD H KESSIN ET AL: "How cellular slime molds evade nematodes Communicated by", DEVELOPMENT BIOLOGY, vol. 93, no. 10, 1 May 1996 (1996-05-01), pages 4857-4861, XP055329169,
- HARUHISA KIKUCHI ET AL: "Furanodictine A and B: Amino Sugar Analogues Produced by Cellular Slime Mold Dictyostelium d iscoideum Showing Neuronal Differentiation Activity", THE JOURNAL OF ORGANIC CHEMISTRY, vol. 66, no. 21, 1 October 2001 (2001-10-01), pages 6982-6987, XP55354636, ISSN: 0022-3263, DOI: 10.1021/jo015657x
- KESSIN.R.H.: 'HOW CELLULAR SLIME MOLDS EVADE NEMATODES' vol. 93, no. 10, 1996, pages 4857 - 4861, XP055329169

## Description

### TECHNICAL FIELD

The present invention relates to use of a repellent comprising, as an active ingredient, a substance for repelling root-knot nematodes which parasitize roots of farm products, and a method for repelling root-knot nematodes.

### BACKGROUND ART

The nematode is a general term for animals belonging to *Nematoda* (*Nemathelminthes*), in which an extremely large number of species actually exist. Almost all of the nematodes are harmless for human. However, some nematodes, which parasite the plant and which are harmful to the plant, are known. For example, root-knot nematodes, cyst nematodes, and root-rot nematodes are exemplified. Among them, the root-knot nematode, which is represented by *Meloidogyne hapla* and *Meloidogyne incognita,* parasites roots of farm products including, for example, potato, carrot, and strawberry. Knots are formed in the root, and the structure is destroyed to cause rotting. Further, the occurrence of soil-borne disease (soil disease) such as bacterial wilt or the like is promoted. It is said that about 5% of the vermin damage of the agricultural product in the whole world is caused by *Meloidogyne hapla.* In order to deal with the damage caused by the root-knot nematode as described above, a pesticide having high toxicity, which is mainly composed of a fumigant (methyl bromide) and an organic phosphorus compound (organophosphorous compound) and which is prohibited to be used in Europe and the United States, is used in Japan.

However, the scattering or sprinkling of such a chemical substance is not preferred in view of the safety of the crop and the worker. In particular, when the infection with the nematode is found during the growth or cultivation of the crop, it is impossible to use the chemical substance having high toxicity as described above for the crop. On this account, a method is demanded, in which the root-knot nematode is expelled, while maintaining the safety of the crop and the worker.

Patent Document 1 discloses the use of alkylbenzene having a specified substituent in order to expel the nematode such as root-knot nematodes or the like. However, this document does not describe any influence exerted on the farm product by such a compound. Further, Patent Document 2 discloses a pest control agent for root-knot nematodes based on the use of an active ingredient of a raw coffee bean extract. For example, a phenol compound such as chlorogenic acid or the like is contained as the active ingredient of the raw coffee been extract. It is shown that the active ingredient as described above is effective to expel root-knot nematodes, while the active ingredient has high safety for the human body and the crop, because the active ingredient is the component originating from the nature. Patent Document 3 discloses a pest control agent for root-knot nematodes which uses an active ingredient of an extract of a specified plant of *Asteraceae.*

By the way, the cellular slime mold is an eukaryotic microorganism which universally lives in soil. The cellular slime mold is usually in the unicellular state, and the cellular slime mold proliferates while eating bacteria as food. It is known that *Caenorhabditis elegans,* which is a nonparasitic nematode having the same habitat as that of the cellular slime mold, has a relationship of prey-predator with the cellular slime mold, while the larva of this nematode exhibits an action to avoid the cellular slime mold, when the larva is co-cultivated in an identical vessel together with *Dictyostelium purpureum* as one species of the cellular slime mold (Non-Patent Document 1). However, any specified communication has not been known until now between the cellular slime mold and the root-knot nematode which is the plant-parasitic nematode.

### PRECEDING TECHNICAL DOCUMENT

### Non-Patent Document:

Non-Patent Document 1: R. Kessin, et al. Proc. Natl. Acad. Sci. USA, Vol. 93, pp. 4857-4861, May 1996 Development Biology.

### Patent Documents:

Patent Document 1: Japanese Patent Application Laid-open No. 7-25707;
Patent Document 2: Japanese Patent Application Laid-open No. 2012-232950;
Patent Document 3: Japanese Patent No. 4528982.

### SUMMARY OF THE INVENTION

### Task to Be Solved by the Invention:

An object of the present invention is to provide use of a repellent for repelling root-knot nematodes without exerting any harmful influence on a farm product and a worker and a method for repelling root-knot nematodes based on the use of the same. In particular, the objects are achieved by use of a repellent according to claim 1, and a method for repelling root-knot nematodes according to claim 9. Preferred embodiments are subject of dependent claims.

### Solution for the Task:

The present inventors have found out that any biological communication is performed between a cellular slime mold living in soil and root-knot nematodes such as *Meloidogyne hapla* or the like, and the present inventors have succeeded in the production of a repellent for repelling root-knot nematodes from the cellular slime mold on the basis of the finding. According to a first aspect of the present invention, there is provided use of a repellent, comprising, as an active ingredient, a substance secreted from a cellular slime mold belonging to a genus *Dictyostelium* for repelling root-knot nematodes.

In relation to the repellent used in the present invention, the substance secreted from the cellular slime mold may be a substance secreted from the cellular slime mold in a multicellular phase, especially from fruiting bodies of the cellular slime mold. Further, the cellular slime mold may be one selected from the group consisting of *D. discoideum, D. purpureum, D. mucoroides, D. fasciculatum, D. monochasioides, D. lacteum,* and *D. giganteum.*

In relation to the repellent used in the present invention, the substance secreted from the cellular slime mold may be obtained by cultivating the cellular slime mold on a medium, removing the cultivated cellular slime mold from the medium, and then extracting the substance from the medium. In this case, the extraction from the medium may be extraction with an organic solvent, or adsorption with an adsorbent. The repellent used in the present invention may further include the cellular slime mold.

According to a second aspect of the present invention, there is provided a method for repelling root-knot nematodes, comprising applying the repellent used in the first aspect of the present invention to an area in which any root-knot nematode exits.

A method for producing a repellent for repelling root-knot nematodes; comprises cultivating a cellular slime mold belonging to a genus *Dictyostelium* so that the cellular slime mold is changed to be in a multicellular phase; and extracting a secreted substance of the cellular slime mold in the multicellular phase with an organic solvent from the cellular slime mold in the multicellular phase. The organic solvent may be methanol or ethanol.

### BRIEF DESCRIPTION OF THE DRAWINGS

Fig. 1(a) shows a photomicrograph illustrating the behavior of *Meloidogyne hapla* when any cellular slime mold was absent (Control), and Figs. 1(b) to 1(d) show composite photomicrographs illustrating the behaviors of *Meloidogyne hapla* when *D. discoideum, D. purpureum,* and *D. mucoroides* were allowed to exist as cellular slime molds on the left side of *Meloidogyne hapla.*
Fig. 2 shows the operation and the result in Exemplary Experiment 2, wherein Fig. 2(a) conceptually shows the arrangement of *Meloidogyne hapla* and a cellular slime mold in a petri dish, and Fig. 2(b) shows a photomicrograph illustrating movement loci of *Meloidogyne hapla* in relation to Areas 1 to 3.
Fig. 3 shows a graph quantitatively illustrating the presence of *Meloidogyne hapla* in Areas 1 to 3 in Exemplary Experiment 2.
Fig. 4 shows the operation and the result in Exemplary Experiment 3, wherein Fig. 4(a) shows a situation in which a cellular slime mold allowed to develop on a filter paper was morphologically changed into fruiting bodies after the elapse of 48 hours, Fig. 4(b) conceptually shows a situation in which *Meloidogyne hapla* was seeded or disseminated on a medium after removing, from the medium, the filter paper on which the fruiting bodies were present, and Fig. 4(c) shows movement loci of *Meloidogyne hapla* photographed with a photomicrograph in relation to Areas 1 and 2.
Fig. 5 shows a graph illustrating loci of the action of *Meloidogyne hapla* in Areas 1 and 2 after being converted into numerical values in Exemplary Experiment 3.
Fig. 6 shows the operation and the result in Exemplary Experiment 4, wherein Fig. 6(a) shows a situation in which a filter paper with a cellular slime mold allowed to develop thereon was arranged on a medium in which beads were present, Fig. 6(b) conceptually shows a situation in which the filter paper adhered with a cellular slime mold extract extracted from the beads was installed on a medium and *Meloidogyne hapla* was seeded thereon, and Fig. 6(c) shows a photomicrograph illustrating movement loci of *Meloidogyne hapla* in relation to Areas 1 and 2.
Fig. 7 shows the result of Exemplary Experiment 4, wherein Figs. 7(a) to 7(c) show graphs in which loci of the behavior of *Meloidogyne hapla* in Areas 1 and 2 were compared after being converted into numerical values, when Samples 1 to 3 of the slime mold extract having different concentrations were used.
Fig. 8 conceptually shows an experiment condition of Exemplary Experiment 5.
Fig. 9 shows a table illustrating the numbers of infection with *Meloidogyne hapla* in relation to the roots of three individuals of bird's-foot trefoil (*Lotus japonicus*) in Exemplary Experiment 5.
Fig. 10 shows photographs illustrating the states of infection with *Meloidogyne hapla* in relation to the roots of three individuals of bird's-foot trefoil in Exemplary Experiment 5.
Fig. 11 shows photomicrographs illustrating movement loci of *Meloidogyne hapla* with respect to cellular slime molds belonging to a genus *Dictyostelium* in Exemplary Experiment 7, and Fig. 11(a) shows movement loci of *Meloidogyne hapla* with respect to *D. fasciculatum,* Fig. 11(b) shows movement loci of *Meloidogyne hapla* with respect to *D. monochasioides,* Fig. 11(c) shows movement loci of *Meloidogyne hapla* with respect to *D. lacteum,* and Fig. 11(d) shows movement loci of *Meloidogyne hapla* with respect to *D. giganteum.*
Fig. 12 shows photomicrographs illustrating movement loci of *Meloidogyne hapla* with respect to cellular slime molds belonging to a genus *Polysphondylium* in Exemplary Experiment 7, wherein *P. pallidum* was used as the cellular slime mold in Fig. 12(a) and *P. violaceum* Iwas used in Fig. 12 (b) .
Fig. 13 shows a photomicrograph illustrating a movement locus of *Meloidogyne hapla* with respect to A. *subglobosum* in Exemplary Experiment 7.
Fig. 14 shows a photomicrograph of "control" in Exemplary Experiment 7.
Fig. 15 shows a graph illustrating the numbers of infection with *Meloidogyne hapla* in relation to the roots of three individuals of bird's-foot trefoil in Exemplary Experiment 6.

### MODE FOR CARRYING OUT THE INVENTION

An explanation will be made below about embodiments of the repellent for root-knot nematodes and the method for repelling root-knot nematodes by using the same according to the present invention.

### <Repellence objective>

Root-rot nematodes, cyst nematodes, and root-knot nematodes are principally known as the plant-parasitic nematode which parasites the roots of farm products. However, in the present invention, the repellence objective is root-knot nematodes. In particular, the repellence objective is root-knot nematodes such as *Meloidogyne hapla, Meloidogyne incognita, Meloidogyne javanica,* and *Meloidogyne arenaria.* The root-knot nematodes as described above parasite the farm products including, for example, tomato, potato, sweet potato, melon, watermelon, pumpkin, cucumber, spinach, and carrot. The root-knot nematodes fixedly stay in the root and exert the harmful influence while releasing, into the soil, proliferated next generation nematodes.

### <Cellular slime mold and acquisition thereof>

The cellular slime mold is principally classified into the three genera of the genus *Dictyostelium,* the genus *Polysphondylium,* and the genus *Acytostelium.* The cellular slime mold used in the present invention is the cellular slime mold belonging to the genus *Dictyostelium* (hereinafter appropriately abbreviated as "*D*." or "genus D" in some cases). For example, there are exemplified *D. discoideum, D. purpureum, D. mucoroides, D. fasciculatum, D. monochasioides, D. lacteum,* and *D. giganteum.* Among them, *D. discoideum, D. fasciculatum, D. lacteum,* and *D. giganteum* are preferred in view of such a viewpoint that the cultivation is easy and the fruiting bodies are easily formed even in the case of the high density. In particular, *D. discoideum* or *D. giganteum* is preferred in view of the same viewpoint. *D. giganteum* is called "seitaka-tamahokorikabi" in Japanese name, which is known to form large fruiting bodies.

The genus *Dictyostelium* is not morphologically branched, and it has a firm cellular stalk. One stalk can support the spore cluster. On the other hand, the genus *Ploysphondylium* (hereinafter appropriately abbreviated as "*P*." or "genus P" in some cases) has a branched structure called "whorl" in the lateral direction, and the stalk is thin. The genus *Acytostelium* (hereinafter appropriately abbreviated as "*A*." or "genus A" in some cases) does not have any cellular stalk, but it has tubular stalk of cellulose. Spores are in the dormant state, and hence they stop the action. However, stalk cells are physiologically alive although they are genetically dead. Compounds are synthesized and secreted thereby. The present inventors estimate that the activity for repelling root-knot nematodes is based on the substance secreted from the stalk cells. The genus *Dictyostelium* has the firmest stalk cells among the three genera described above. Therefore, it is considered that the genus *Dictyostelium* secretes a large amount of the substance which exhibits the activity for repelling root-knot nematodes.

Note that the cellular slime mold can be also classified into Groups I to IV in accordance with a genetic classification method (classification based on nucleotide sequence of DNA) (P. Schaap et al., Science, 27 OCTOBER 2006, Vol. 314 No. 5799, pp. 661-663). For example, *D. discoideum, D. purpureum, D. mucoroides,* and *D. giganteum* belong to Group IV, *D. lacteum* belongs to Group III, *A. subglobosum* belonging to the genus *Acytostelium* and *P. pallidum* belonging to the genus *Polysphondylium* belong to Group II, and *D. fasciculatum* belongs to Group I. The cellular slime molds as described above can be acquired in the states of spores, for example, from National Bioresource Project (NBRP), and they can be cultivated. Alternatively, those gathered from soil can be separated and used.

### <Secreted material of cellular slime mold>

According to the results of embodiments described later on, the present inventors have found out that the substance (active ingredient of the repellent), which repels root-knot nematodes, is not the cellular slime mold itself, but the substance (secreted material of the cellular slime mold), which is secreted from the cellular slime mold, exhibits the repellence against nematodes. When the cellular slime mold is acquired in a state of spores, the spores germinate to be unicellular, followed by being multicellular in a starvation state. Further, fruiting bodies are formed. The present inventors have found out that the secreted material of the cellular slime mold, which repels root-knot nematodes, can be obtained in a large amount especially from the fruiting bodies of the cellular slime mold. It is considered that the secreted material of the cellular slime mold is a metabolite produced by the cellular slime mold. However, for example, any compound thereof (or biological substance or microorganism) cannot be specified at the present stage. It has been verified in embodiments described later on that the substance (repellent), which repels root-knot nematodes, can be produced from the cellular slime mold. According to the fact that the substance (repellent) is extracted with an organic solvent, it is considered that the substance (repellent) is a hydrophobic substance (for example, organic compound).

### <Method for extracting (method for producing) secreted material of cellular slime mold>

The secreted material of the cellular slime mold, which repels root-knot nematodes, can be obtained, for example, by means of the following method. Usually, the cellular slime mold can be acquired in a state of powder (spores). The powdery cellular slime mold as described above is cultivated together with *Escherichia coli* in agar. Spores of the cellular slime mold germinate on the agar medium to form amoeba. The amoeba proliferates by being fed with *Escherichia coli.* However, when the feed is exhausted, then the amoeba is in the starvation state, and cells are gathered to be multicellular. After that, fruiting bodies are formed. The obtained fruiting bodies are recovered, and they are added into an organic solvent such as methanol, ethanol or the like, followed by being stationarily placed. The fruiting bodies are precipitated in the organic solvent. The hydrophobic substance, which is included in the substances secreted from the fruiting bodies, is dissolved or dispersed in the upper layer

(supernatant) of ethanol. The supernatant is taken out by being separated from the fruiting bodies, for example, by means of the filtration. Thus, a solution of the secreted material of the cellular slime mold is obtained. The substance can be also taken out as a solid matter by drying the solution of the secreted material of the cellular slime mold, if necessary. Note that it is not necessarily indispensable that the cellular slime mold should be cultivated until the cellular slime mold is morphologically changed into the fruiting body (multicellular phase). However, the substance, which is secreted from the cellular slime mold in the unicellular phase, has the repelling activity lower than that of the substance which is secreted from the cellular slime mold in the multicellular phase.

Alternatively, the substance can be also adsorbed by using an adsorbent in order to separate and extract the secreted material of the cellular slime mold. For example, the cellular slime mold (or the fruiting body thereof) is cultivated on a filter such as a filter paper or the like disposed on a buffer solution containing an adsorbent such as an ion exchange resin or the like (for example, Amberlite XAD-2 used to adsorb *Escherichia coli*). The substance secreted from the cellular slime mold passes through the filter. Thus, the substance is separated from the cellular slime mold, and the substance is adsorbed to the adsorbent. It is desirable that the adsorbent adsorbs the hydrophobic substance. The adsorbent is added to an organic solvent such as ethanol or the like, and the extraction is performed with the solvent. Thus, the solution of the secreted material of the cellular slime mold is obtained. The solution of the secreted material of the cellular slime mold can be further dried to obtain a solid matter as well. Note that it has been revealed from embodiments described later on that the repellence of the secreted material of the cellular slime mold against root-knot nematodes exhibits the dependency on the concentration of the secreted material of the cellular slime mold. Therefore, it is desirable that the obtained secreted material of the cellular slime mold, the solution thereof, or the dispersion thereof is concentrated, or the extraction is performed in a concentrated form.

### <Method for repelling root-knot nematodes>

The secreted material of the cellular slime mold or the solution thereof obtained as described above is applied to the plant and/or the soil of the farmland or the like, and thus it is possible to repel root-knot nematodes. The farmland is exemplified by farmlands to farm or cultivate, for example, sweet potato, potato, pepper, eggplant, radish, Chinese cabbage, taro, soybean, strawberry, tomato, watermelon, melon, onion, peanut, carrot, burdock, Chinese yam, corn, asparagus, and grape. However, there is no limitation thereto. The farmland may be any area in which any root-knot nematode exists or may exist.

In order to apply the secreted material of the cellular slime mold to the soil of the farmland or the like, it is also appropriate that a solution or a dispersion of the secreted material of the cellular slime mold is sprayed, or the secreted material of the cellular slime mold is scattered or sprinkled as a powder. The secreted material of the cellular slime mold can be scattered or sprinkled in any arbitrary form. The spraying and/or scattering method can be performed by using any arbitrary method and apparatus. When the secreted material of the cellular slime mold is scattered as the powder, it is also appropriate that the secreted material of the cellular slime mold is carried on a carrier. Such a carrier may be the filter paper or the beads used when the cellular slime mold is separated from the secreted material thereof. Alternatively, it is also appropriate that the secreted material of the cellular slime mold is carried on a soil modifier such as zeolite or the like, in view of the scattering on the farmland or the like. Alternatively, it is also appropriate that the secreted material of the cellular slime mold is scattered on the farmland or the like by being mixed with an agricultural chemical or a fertilizer. The amount of use of the secreted material of the cellular slime mold or the solution thereof may be such an amount that root-knot nematodes living in soil are sufficiently repelled, and the amount is not specifically limited. For example, 100 to 500 mg of the secreted material of the cellular slime mold can be used per 1 liter of soil. Alternatively, the secreted material of the cellular slime mold or the solution thereof may be applied to the plant by immersing the root of the plant in the solution of the secreted material of the cellular slime mold or scattering the solution on the root. The secreted material of the cellular slime mold is obtained by separating and extracting the substance existing in the nature. Therefore, it is possible to effectively repel root-knot nematodes without withering the farm product and killing the living thing.

The secreted material of the cellular slime mold obtained as described above can be used as the active ingredient of the repellent for root-knot nematodes. The secreted material of the cellular slime mold may be used singly in the repellent, or another component may be added. The another component is exemplified, for example, by fertilizers, agricultural chemicals, soil modifiers, and carriers for carrying the secreted material of the cellular slime mold. The cellular slime mold itself may be contained in the repellent, in view of the easiness of the production and the repelling effect. However, when the active ingredient for repelling root-knot nematodes is concentrated and used as described above, it is desirable that only the secreted material of the cellular slime mold, from which, for example, the cellular slime mold and lipids are removed, is used.

Examples of the repellent used in the present invention will be specifically explained below in accordance with Exemplary Experiments 1 to 5 described below. However, the present invention is not limited thereto.

### <Exemplary Experiment 1: experiment of repelling against root-knot nematodes by cellular slime mold>

The following experiment was performed in order to investigate the evading action (avoiding action) of *Meloidogyne hapla* with respect to four types of cellular slime molds shown in Table 1 (*D. discoideum, D. purpureum, D. mucoroides, P. violaceum*). The four types of the cellular slime molds were acquired, for example, from NBRP, and *Meloidogyne hapla* was used after being cultivated in Laboratory of Derek Goto of Faculty of Agriculture, Hokkaido University to which Derek Goto as one of the inventors of the present invention belongs.

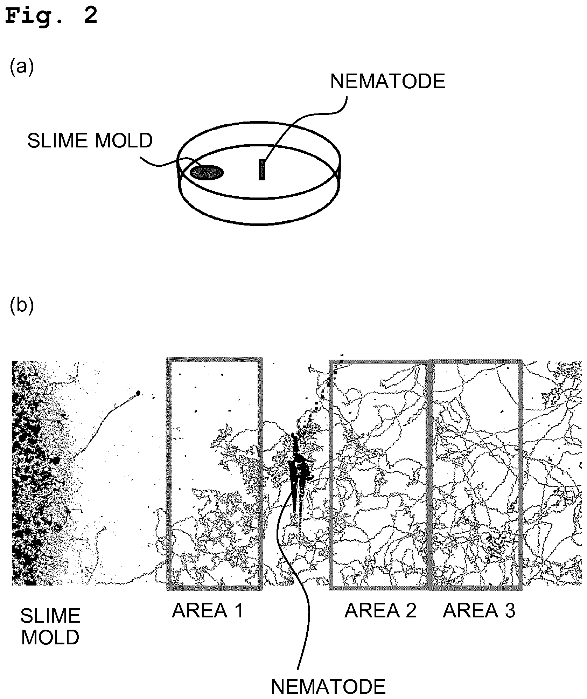

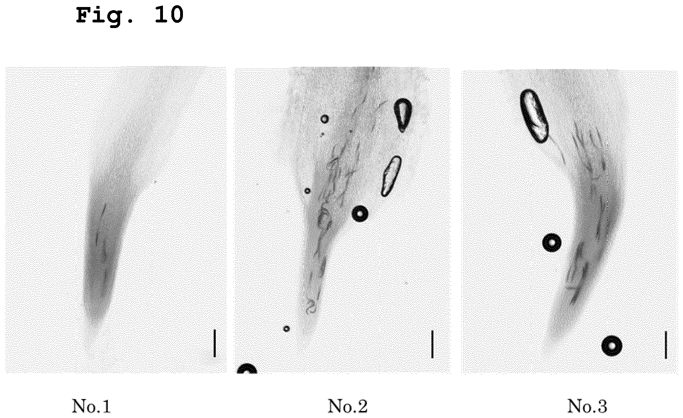

The cellular slime mold was proliferated by using *Escherichia coli* or *Klebsiella* as the feed on an agar medium. The cellular slime mold was recovered with a spatula in the logarithmic growth phase, and suspended in a phosphate buffer. After that, the feed was removed while performing the washing by means of the centrifugation to perform the starvation treatment. The cellular slime mold, which was pretreated as described above, was allowed to develop on the left side of a petri dish added with phytagel so that 1.0 x 10⁸ cells/cm² was provided. After 1.5 hours (unicellular phase), as shown in Fig. 2(a), 10 individuals of *Meloidogyne hapla* were seeded at a central position of the petri dish. The behavior of *Meloidogyne hapla* was observed by using a microscope (Nikon AZ100 Multizoom microscope).

A similar experiment was performed by seeding 10 individuals of *Meloidogyne hapla* at the center of a petri dish after confirming the morphological change into fruiting bodies of the cellular slime mold by allowing the cellular slime mold to develop on the left side of the petri dish and waiting a lapse of 24 hours.

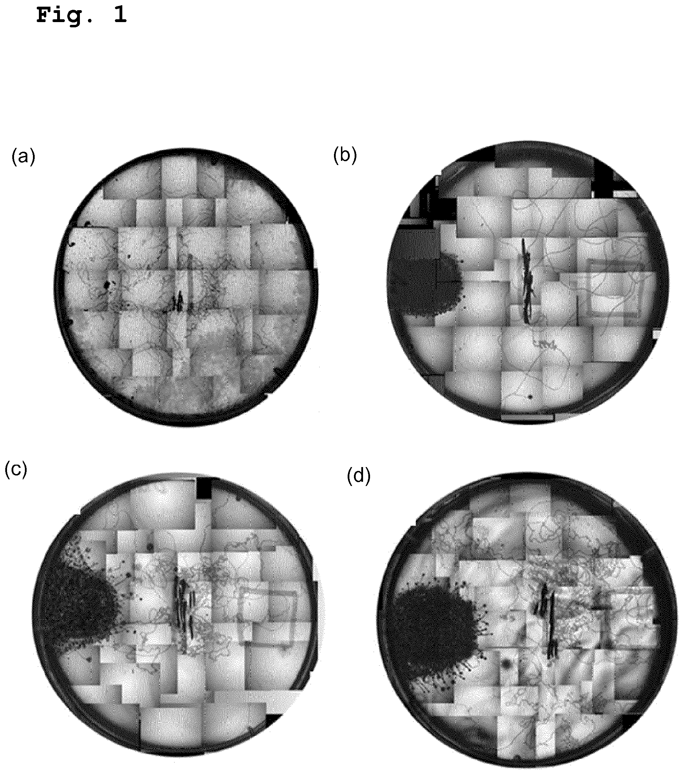

A phosphate buffer solution containing no cellular slime mold was used as Control. Photomicrographs are shown to illustrate the behaviors of *Meloidogyne hapla* in Fig. 1(a) when any cellular slime mold was not present (Control), in Fig. 1(b) when *D. discoideum* in the multicellular phase was present, in Fig. 1(c) when *D. purpureum* in the multicellular phase was present, and in Fig. 1(d) when *D. mucoroides* in the multicellular phase was present. Note that as for the photographs, images were photographed by using a digital camera (Nikon DS-2MBWC camera head), and then an image processing to connect the images to one another was performed to depict the entire region of the petri dish. As shown in Fig. 1(a), in the case of Control, the traces of the movement of *Meloidogyne hapla* range over the entire surface of the petri dish, especially from the center to both of the right side and the left side of the petri dish as well. Therefore, it is understood that *Meloidogyne hapla* usually exhibits the random action. On the other hand, as shown in Fig. 1(b), the evading action was observed such that all individuals of *Meloidogyne hapla* avoided *D. discoideum* disposed on the left side of the petri dish. Further, as shown in Fig. 1(c), the action was confirmed such that only one individual or two individuals of *Meloidogyne hapla* was/were directed to *D. purpureum* disposed on the left side of the petri dish. The same behavior as that shown in Fig. 1(c) was also confirmed in Fig. 1(d). On the other hand, when *P. violaceum* was used as the cellular slime mold, the behaviors as shown in Figs. 1(a) to 1(c) were not confirmed, and the same result as that of Control was obtained. The results are shown in Table 1. Note that in Table 1, the degree of avoidance, in which *Meloidogyne hapla* evaded or avoided the cellular slime mold, was represented in accordance with the following criteria. +++: all 10 individuals of *Meloidogyne hapla* were not directed to the cellular slime mold. ++: only one individual or two individuals of *Meloidogyne hapla* was/were directed to the cellular slime mold. +: three individuals or four individuals of *Meloidogyne hapla* were directed to the cellular slime mold. -: individuals of *Meloidogyne hapla* moved at random (moved at the same ratio from the center to both of the left side and the right side of the petri dish).

**Table 1**

| | Unicellular phase | Multicellular phase |
|---|---|---|
| *D. discoideum* | ++ | +++ |
| *D. purpureum* | + | ++ |
| *D. mucoroides* | + | ++ |
| *P. violaceum* | - | - |

Note that as for the cellular slime molds in the unicellular state, it was confirmed that *Meloidogyne hapla* took the action to slightly avoid the cellular slime molds in relation to *D. discoideum, D. purpureum,* and *D. mucoroides,* though not to the extent of the cellular slime molds in the multicellular phase as shown in Table 1.

### <Exemplary Experiment 2: quantitative analysis of evading action of Meloidogyne hapla>

In Exemplary Experiment 1, the action of *Meloidogyne hapla* to evade the cellular slime mold was visually chased by means of the image processing of the photomicrograph. However, in Exemplary Experiment 2, the action of *Meloidogyne hapla* was quantitatively analyzed as follows. *D. discoideum* was allowed to develop as the cellular slime mold at a density of 1.0 x 10⁸ cells/cm² on the left side of a petri dish with phytagel in the same manner as in Exemplary Experiment 1. Subsequently, five individuals of *Meloidogyne hapla* were seeded at a position separated by 19 mm on the right side from the end of the cellular slime mold (see Fig. 2(a)). The action of *Meloidogyne hapla* was analyzed as follows after the elapse of 24 hours after the seeding. As shown in Fig. 2(b), Areas 1 and 2 were set on the both sides of *Meloidogyne hapla,* and Area 3 was set on a side of Area 2 separated from *Meloidogyne hapla.* The size of each of the areas was 0.75 x 1.78 cm, and the space between Area 1 and Area 2 was 0.56 cm. Images were photographed for 24 hours by using a digital camera (Nikon DS-2MBWC camera head) for the microscope in relation to each of the areas. The extent of the existence of traces of movement of *Meloidogyne hapla* in each of the areas was digitized by counting the number of dots by using image analysis software ImageJ for the photographed image.

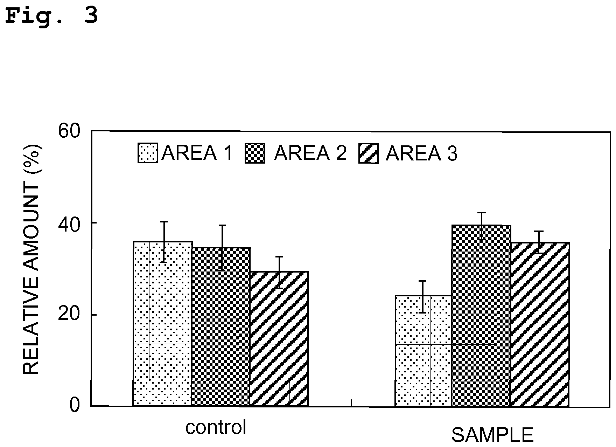

Results obtained by the image analysis are shown in Fig. 3. In Fig. 3, the left side indicates the result of Control, and the right side indicates the result of Sample in which the cellular slime mold exists. In the case of Control, any significant difference is not observed in relation to Areas 1 to 3. However, in the case of Sample in which the cellular slime mold exists, the value of Area 1 is clearly lower than the values of Areas 2 and 3. It is possible to quantitatively confirm that *Meloidogyne hapla* is repelled by *D. discoideum.* Note that the relative amount of the vertical axis of the drawing is represented by the areal size ratio of each of the areas with respect to the total of all of the areas in relation to the movement loci (tracks) of the movement of nematode.

### <Exemplary Experiment 3: confirmation of evading action of Meloidogyne hapla caused by secreted material of cellular slime mold>

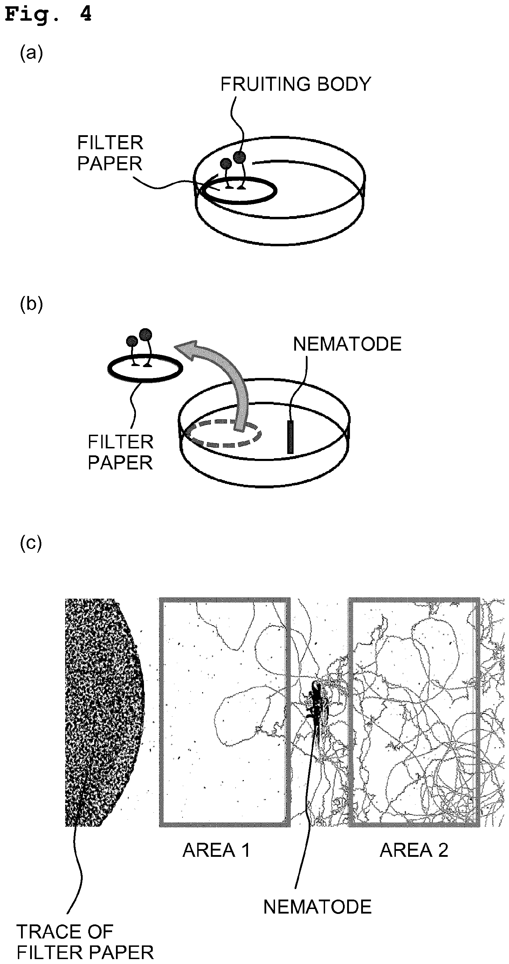

In this exemplary case, the investigation was performed about the cause of the occurrence of the evading action of *Meloidogyne hapla.* As shown in Fig. 4(a), a filter paper having a diameter of 2 cm was placed at the end of a phytagel medium contained in a petri dish. *D. discoideum* as the unicellular cellular slime mold, which was pretreated in the same manner as in Exemplary Experiment 1, was allowed to develop at 1.0 x 10⁸ cells/cm² on the filter paper. After 48 hours, the filter paper was taken out from the petri dish together with the cellular slime mold existing as fruiting bodies, and the cellular slime mold was removed from the phytagel medium. Subsequently, as shown in Fig. 4(b), five individuals of *Meloidogyne hapla* were seeded at a point of 12 mm on the right side from the right end of the trace of the filter paper. After the elapse of 24 hours, the action of *Meloidogyne hapla* was observed by using a microscope (Nikon AZ100 Multizoom microscope). In this observation, Area 1 and Area 2 were set on the both sides of the phytagel medium seeded with *Meloidogyne hapla* in the same manner as in Exemplary Experiment 2, and the action of *Meloidogyne hapla* was quantitatively analyzed in these areas. As shown in Fig. 4(c), the movement loci of *Meloidogyne hapla* are observed in Area 1 and Area 2. The amount of loci (tracks) of *Meloidogyne hapla* in Area 2 is larger than that in Area 1. According to this fact, it is considered that any substance existing in the filter paper trace repelled *Meloidogyne hapla.*

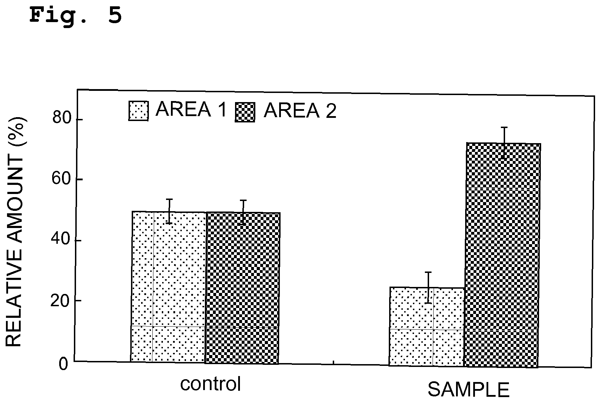

Fig. 5 shows results of the quantitative analysis performed in the same manner as in Exemplary Experiment 2. In Fig. 5, the left side indicates the result of Control, and the right side indicates the result of Sample in which the cellular slime mold was removed together with the filter paper. In the case of Control, the action of *Meloidogyne hapla* was confirmed to approximately the same extent in any one of the areas. However, in the case of the Sample in which the cellular slime mold was removed together with the filter paper, the numerical value of Area 1 was clearly lower than that of Area 2. It was able to quantitatively confirm that *Meloidogyne hapla* was repelled by any substance existing in the sample. According to this experimental result, it is understood that the factor, which repels *Meloidogyne hapla,* is neither the cellular slime mold itself nor any physical factor such as carbon dioxide or the like. Further, 48 hours have elapsed for the cellular slime mold after the application of the starvation treatment. Therefore, it is also understood that the factor, which repels *Meloidogyne hapla,* is not bacteria as the food for the cellular slime mold. Therefore, it is considered that the factor, which repels *Meloidogyne hapla,* is the substance allowed to pass through the filter paper, the substance being included in some kind of substances secreted (or released) from the cellular slime mold. In particular, according to the fact that 48 hours have elapsed after the development of the cellular slime mold, the cellular slime mold forms the fruiting bodies as the multicellular form. It is considered that the substance, which repels *Meloidogyne hapla,* is the substance secreted from the fruiting bodies.

### <Exemplary Experiment 4: dependency of repelling characteristic on concentration of secreted material of cellular slime mold>

According to the result of Exemplary Experiment 3, it has been revealed that the substance, which is secreted or released from the cellular slime mold, repels *Meloidogyne hapla.* Therefore, the investigation has been performed in Exemplary Experiment 4 to confirm whether or not the repelling characteristic has the dependency on the concentration of the secreted material of the cellular slime mold.

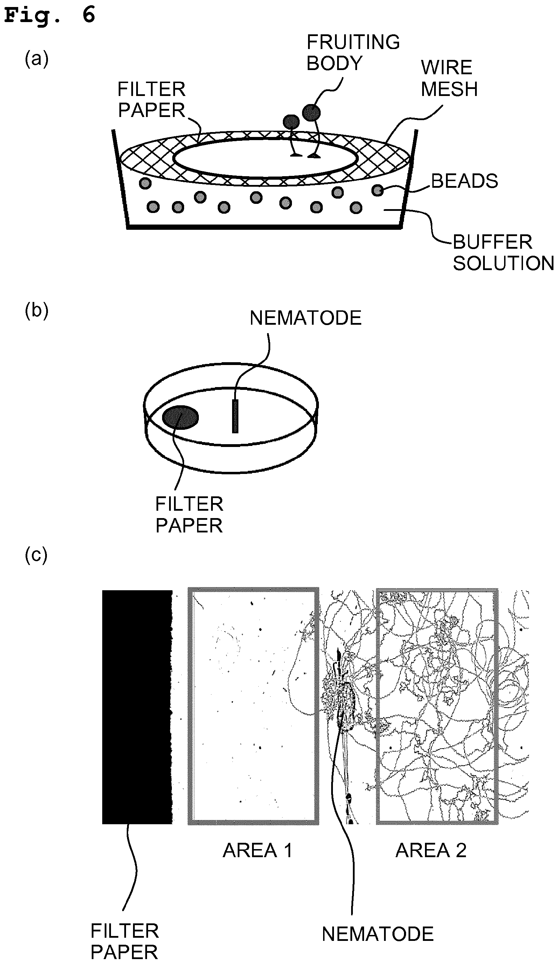

1.5 g of ion exchange resin beads (Amberlite XAS-2), which had been washed with water, were placed in a tray made of metal, and a phosphate buffer solution was poured thereinto. After that, a wire mesh, on which a filter paper was placed, was arranged on the liquid surface of the phosphate buffer solution (Fig. 6(a)). *D. discoideum* as the cellular slime mold subjected to the starvation treatment was allowed to develop on the filter paper at a density not exceeding 2.0 x 10⁶ cells/cm², which was cultivated while being agitated at 22°C for 72 hours at 40 rpm by using a rotary shaker (ROTARY SHAKER NR-2 (TAITEC JAPAN)). The liquid surface of the phosphate buffer solution was periodically brought in contact with the filter paper on the wire mesh in accordance with the agitation with the rotary shaker. It was visually confirmed that the cellular slime mold changed into fruiting bodies during 72 hours. After that, the beads were recovered from the tray, which were subjected to washing with water and draining. After that, the beads were immersed in 10 ml of 99.5% ethanol, followed by being stored at 4°C for 2 weeks. Subsequently, 10 ml of 99.5% ethanol was added to ethanol in which the beads were immersed, followed by being agitated. The substance (hydrophobic substance) adhered to the beads was extracted with ethanol. After that, the operation, in which the centrifugation was performed by using 50% ethanol and the supernatant was recovered, was repeated until 50% ethanol becomes transparent. The recovered extract solution was transferred to an eggplant-shaped flask, and water was removed by using a rotary evaporator. Obtained solid matter was dissolved in 40% methanol, and a somewhat yellowish transparent liquid was prepared as a slime mold extract solution.

Three types of solutions were prepared in relation to the slime mold extract solution so that the concentrations obtained by dissolving the solid matter were 4.0 mg/ml (Sample 1), 2.0 mg/ml (Sample 2), and 0.4 mg/ml (Sample 3). 100 µl of each of the solutions was absorbed into a filter paper, followed by being dried by the air in a clean bench for 1 hour. Subsequently, as shown in Fig. 6(b), the filter paper was placed on the phytagel in a petri dish, and five individuals of *Meloidogyne hapla* were seeded at a position of 12 mm on the right side from the right end of the filter paper. After 24 hours, the action of *Meloidogyne hapla* was quantitatively analyzed by using a microscope in the same manner as in Exemplary Experiment 2.

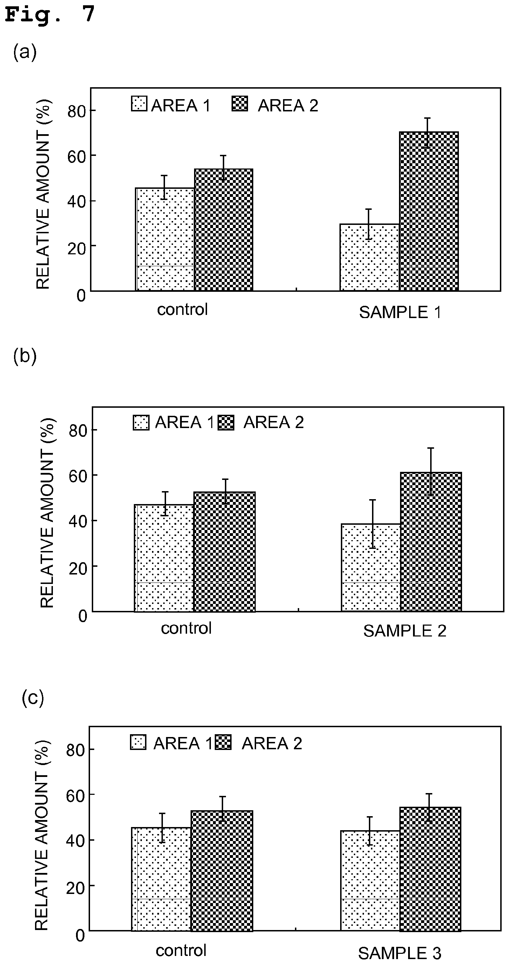

Areas 1 and 2 were set on the both sides of *Meloidogyne hapla* in the same manner as in Exemplary Experiment 3, and the action of *Meloidogyne hapla* was observed in the areas by using the microscope. Fig. 6(c) shows an observation result obtained when 100 µl of Sample having the concentration of 4.0 mg/ml (corresponding to 0.4 mg of Sample) was adsorbed into the filter paper. According to Fig. 6(c), it is understood that *Meloidogyne hapla* hardly entered Area 1. Further, graphs of Figs. 7(a) to 7(c) show results in which the action of *Meloidogyne hapla* is quantitatively analyzed in Area 1 and Area 2 in relation to Samples having the three types of concentrations. In the case of Sample 3 shown in Fig. 7(c), the concentration of the slime mold extract solution is low, and hence any distinct difference in the numerical value is not observed between Area 1 and Area 2. However, in Fig. 7(b), Area 2 clearly exhibits the higher numerical value as compared with Area 1. Further, in Fig. 7(a), Area 2 exhibits the high numerical value which is not less than two times that of Area 1. Therefore, it has been revealed that the higher the concentration of the slime mold extract solution is, the more conspicuous the exhibited repelling effect on *Meloidogyne hapla* is.

### <Exemplary Experiment 5: test of infection of plant with Meloidogyne hapla in the presence of secreted material of cellular slime mold>

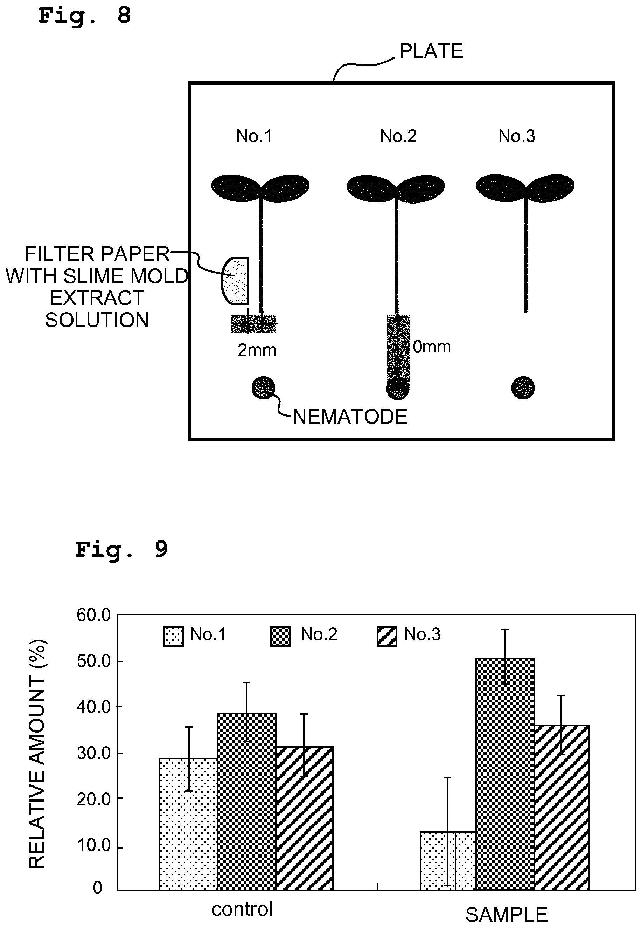

In Exemplary Experiment 5, the test was performed to know the way of action of the secreted material of the cellular slime mold when an actual plant was infected with the nematode. Bird's-foot trefoil (*Lotus japonicus*) belonging to *Leguminosae* prepared as described below was used as the plant sample. Hulls or husks were removed from seeds of bird's-foot trefoil previously subjected to water retention and sterilization. Seeds were aligned while providing spaces of not less than 5 mm on a medium prepared with Ca, P, iron citrate, and KNO₃, followed by being stored at 22°C. After 2 days, germinated bird's-foot trefoil was transferred onto a new medium. Three individuals of bird's-foot trefoil (Sample Nos. 1 to 3) were juxtaposed while providing spaces of 35 mm on one plate as shown in Fig. 8 to be used as the plate for the infection experiment.

100 µl of the slime mold extract solution having the concentration of 4.0 mg/ml obtained in Exemplary Experiment 4 was adsorbed into a filter paper piece obtained by cutting a filter paper having a radius of 1 cm into halves, followed by being dried by the air for 1 hour in a clean bench. As shown in Fig. 8, the filter paper was placed at a position separated by 2 mm from the root of bird's-foot trefoil (Sample No. 1) allowed to grow on the leftmost side, of individuals of bird's-foot trefoil on the plate for the infection experiment. About fifty individuals of nematode were seeded at a position separated by 10 mm from the forward end of the root of each individual of bird's-foot trefoil, followed by being cultivated for 48 hours at 23°C. The root of bird's-foot trefoil was lightly washed with water, followed by being immersed in 25% antiformin for 3 minutes. The root was sufficiently washed with water, and the root was placed into a well of 6-well plate added with acidic fuchsine stock, followed by being heated for 5 minutes in a thermostatic chamber at 100°C. After that, the heat was released at room temperature for 10 minutes. The sample was immersed in a petri dish including acid-added glycerol spread on the entire surface, followed by being heated for 30 minutes at 95°C. Stained *Meloidogyne hapla* was squashed with cover glass together with each of the roots of Sample Nos. 1 to 3, and the number of nematodes in infection was visually counted. Fig. 10 shows, in enlarged photographs, the infection states caused by *Meloidogyne hapla* in the three roots of bird's-foot trefoil. In Samples Nos. 1 to 3 shown in Fig. 10, a plurality of slender and linear ones are *Meloidogyne hapla,* and black elliptic and circular ones are bubbles.

Further, Fig. 9 shows a graph illustrating the number of infections with *Meloidogyne hapla* in the roots of bird's-foot trefoil of Samples Nos. 1 to 3. In the case of Control, the slime mold extract solution is absent, but the numerical value of Sample No. 2 is significantly high, for the following reason. That is, it is considered that Sample No. 2 of the three individuals of bird's-foot trefoil is positioned at the intermediate position, and hence the individuals of *Meloidogyne hapla* other than the individuals of *Meloidogyne hapla* existing immediately under the sample easily access Sample No. 2 as compared with Samples 1 and 3. On the other hand, when the slime mold extract solution is present, the number of individuals of *Meloidogyne hapla* in Sample No. 1 is remarkably decreased. According to this fact, it is understood that *Meloidogyne hapla* is repelled from entering the root of bird's-foot trefoil existing near to the slime mold extract solution. According to the result of Exemplary Experiment 5, it is possible to repel *Meloidogyne hapla* existing therein or intended to make invasion, by scattering or sprinkling the secreted material of the cellular slime mold or the liquid containing the same in soil or the like.

### <Exemplary Experiment 6: repelling characteristic of secreted material of cellular slime mold extracted by another extracting method>

The cellular slime mold was placed on 30 petri dishes of 25 cm x 25 cm in the same manner as Exemplary Experiment 1, followed by being completely changed into fruiting bodies after the elapse of 1 week. The fruiting bodies were recovered, and they were added into a vessel containing 10 ml of 100% ethanol, followed by being stored at 4°C for 10 days. After that, ethanol was added to this vessel so that the total amount was 200 ml. The fruiting bodies were separated with a filter paper, followed by being dried up by using a rotary evaporator. The dried up fruiting bodies was added and suspended in 50 ml of 40% methanol, followed by being filtrated with a filter paper again and dried up by using a rotary evaporator. Subsequently, the dried up extract was dissolved in 40% methanol so that the final concentration was 80 mg/ml. Thus, a yellowish transparent liquid (slime mold extract solution) was obtained.

The infection test was performed for bird's-foot trefoil infected with *Meloidogyne hapla* in the same manner as in Exemplary Experiment 5 by using the obtained slime mold extract solution. That is, hulls or husks were removed from seeds of bird's-foot trefoil previously subjected to water retention and sterilization. Seeds were aligned while providing spaces of not less than 5 mm on a medium prepared with Ca, P, iron citrate, and KNO₃, followed by being stored at 22°C. After 2 days, germinated bird's-foot trefoil was transferred onto a new medium. Three individuals of bird's-foot trefoil (Sample Nos. 1 to 3) were juxtaposed while providing spaces of 35 mm on one plate as shown in Fig. 8 to be used as the plate for the infection experiment.

100 µl of the slime mold extract solution having the concentration of 80 mg/ml obtained in Exemplary Experiment 6 was adsorbed into a filter paper piece obtained by cutting a filter paper having a radius of 1 cm into halves, followed by being dried by the air for 1 hour in a clean bench. As shown in Fig. 8, the filter paper was placed at a position separated on the left side by 2 mm from the root of bird's-foot trefoil (Sample No. 1) allowed to grow on the left side, of individuals of bird's-foot trefoil on the plate for the infection experiment. About fifty individuals of nematode were seeded at a position separated downwardly by 10 mm from the forward end of the root of each individual of bird's-foot trefoil, followed by being cultivated for 48 hours at 23°C. Subsequently, the root of bird's-foot trefoil was lightly washed with water, followed by being immersed in 25% antiformin for 3 minutes. The root was sufficiently washed with water, and the root was placed into a well of 6-well plate added with acidic fuchsine stock, followed by being heated for 5 minutes in a thermostatic chamber at 100°C. After that, the heat was released at room temperature for 10 minutes. The sample was immersed in a petri dish including acid-added glycerol spread on the entire surface, followed by being heated for 20 minutes at 95°C. Stained *Meloidogyne hapla* was squashed with cover glass together with the roots of Sample Nos. 1 to 3, and the number of nematodes was visually counted.

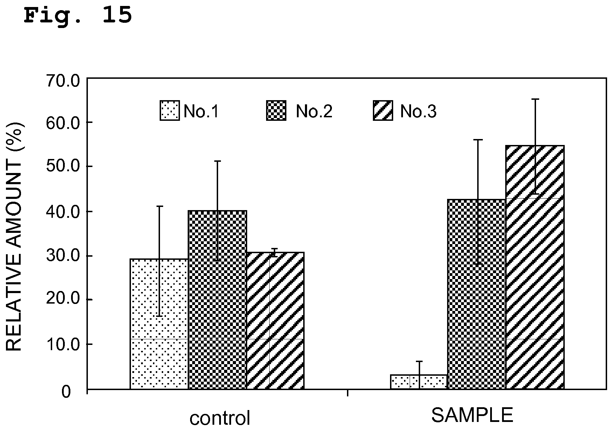

Fig. 15 shows a graph illustrating the number of infections with *Meloidogyne hapla* in the roots of bird's-foot trefoil of Samples Nos. 1 to 3. In the case of Control, the slime mold extract solution is absent, but the numerical value of Sample No. 2 is significantly high, for the following reason. That is, it is considered that Sample No. 2 of the three individuals of bird's-foot trefoil is positioned at the intermediate position, and hence the individuals of *Meloidogyne hapla* other than the individuals of *Meloidogyne hapla* existing immediately under the sample easily access Sample No. 2 as compared with Samples 1 and 3. On the other hand, when the slime mold extract solution is present, the number of individuals of *Meloidogyne hapla* in Sample No. 1 is remarkably small. According to this fact, it is understood that *Meloidogyne hapla* is repelled from entering the root of bird's-foot trefoil existing near to the slime mold extract solution. More notably, the number of individuals of *Meloidogyne hapla* of Sample No. 3 is larger than the number of individuals of *Meloidogyne hapla* of Sample No. 2. When the comparison is made with the result of Exemplary Experiment 5 shown in Fig. 9 (the number of individuals of *Meloidogyne hapla* of Sample No. 3 is smaller than the number of individuals of *Meloidogyne hapla* of Sample No. 2), it is understood that *Meloidogyne hapla* can be more repelled from bird's-foot trefoil when the slime mold extract solution prepared in Exemplary Experiment 6 is used.

The present inventors consider as follows about the remarkable repelling effect on *Meloidogyne hapla* exerted by the slime mold extract solution. In Exemplary Experiment 5, the substance, which was produced by the fruiting bodies of the cellular slime mold, was allowed to pass through the filter paper, and the substance was recovered with the beads. However, in Exemplary Experiment 6, the substance, which is produced by the fruiting bodies of the cellular slime mold, is directly extracted in methanol and recovered. In particular, it is considered that the repelling substance to repel *Meloidogyne hapla* is contained in a larger amount in the portion of the stalks or the spores as compared with the portion of the basal disc of the fruiting body of the cellular slime mold. According to the fact as described above, it is considered that the repelling substance can be recovered at a higher yield when the fruiting bodies are immersed in methanol and the repelling substance is directly recovered, for example, from the stalks and the spores thereof, as compared with when the repelling substance is recovered by the aid of the filter paper. Further, the present inventors speculate that any growth inhibitor (not identified at the present time), which inhibits the growth of the root of bird's-foot trefoil, is contained in the basal disc of the fruiting body. It is considered that in Exemplary Experiment 5, the basal discs of the fruiting bodies adhered to the filter paper, and hence the growth inhibitor was able to pass through the filter paper at a relatively high rate. On the contrary, in Exemplary Experiment 6, both of the growth inhibitor and the repelling substance for repelling *Meloidogyne hapla* are directly extracted with methanol. In this case, it is considered that the extraction rate of the repelling substance with respect to the growth inhibitor is higher than that in Exemplary Experiment 5.

According to the fact as described above, it is understood to be effective that the fruiting bodies of the cellular slime mold are directly immersed in the organic solvent such as methanol to perform the extraction and the purification in order to produce the repelling substance to repel *Meloidogyne hapla* from the cellular slime mold. Note that in Exemplary Experiment 6, methanol was used as the organic solvent. However, no problem arises even in the case of any other organic solvent including, for example, ethanol, isopropanol, chloroform, and ethyl acetate.

<Exemplary Experiment 7: observation of presence or absence of repelling characteristic of other cellular slime molds>

The repelling characteristic to repel *Meloidogyne hapla* was observed in relation to *D. fasciculatum, D. monochasioides, D. lacteum,* and *D. giganteum* belonging to the genus D as the cellular slime molds other than the cellular slime mold used in Exemplary Experiment described above. Further, the repelling characteristic to repel *Meloidogyne hapla* was also observed in relation to *P. pallidum* and *P. violaceum* belonging to the genus P (used in Exemplary Experiment 1) and *A. subglobosum* belonging to the genus A.

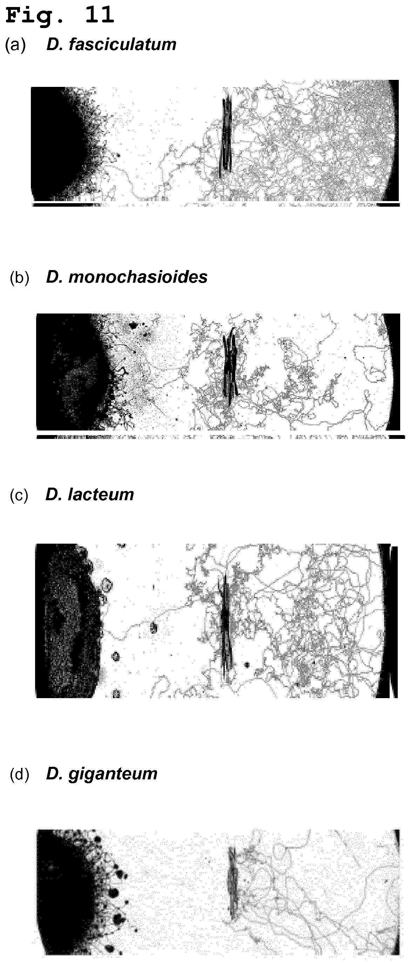

Each of the seven types of cellular slime molds was allowed to develop on the left side of a petri dish in the same manner as in Exemplary Experiment 1, and then it was confirmed that the cellular slime mold morphologically changed to the fruiting bodies after the elapse of 24 hours. After that, 10 individuals of *Meloidogyne hapla* were seeded at a central position of the petri dish to observe the loci of *Meloidogyne hapla.* As for the observation result, the image was photographed over 24 hours by using a digital camera for the microscope in the same manner as in Exemplary Experiment 2. Note that, a phosphate buffer solution containing no cellular slime mold was used as Control. Figs. 11(a) to 11(d) show images photographed for *D. fasciculatum, D. monochasioides, D. lacteum,* and *D. giganteum* belonging to the genus D respectively. In any case, a larger number of movement loci of *Meloidogyne hapla* are observed in an area (right side of the drawing) separated from the cellular slime mold. According to this fact, it is understood that *Meloidogyne hapla* evaded the cellular slime molds belonging to the genus D.

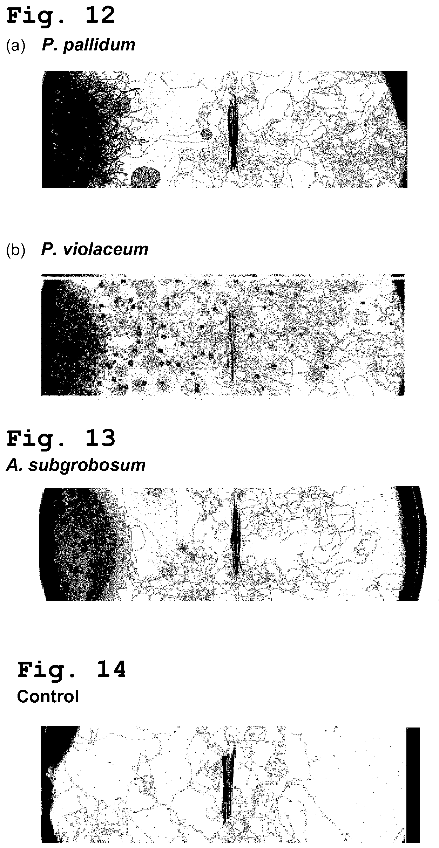

On the other hand, as shown in Figs. 12(a) and 12(b), *Meloidogyne hapla* exhibited the evading action with respect to *P. pallidum* between *P. pallidum* and *P. violaceum* belonging to the genus P. However, *Meloidogyne hapla* did not exhibit the evading action with respect to *P. violaceum* in the same manner as in Exemplary Experiment 1. Further, as shown in Fig. 13, *Meloidogyne hapla* did not exhibit the evading action with respect to *A. subglobosum* belonging to the genus A in the same manner as in Control shown in Fig. 14.

According to the results described above, it is understood that the cellular slime molds, especially the cellular slime molds belonging to the genus D are effective to repel *Meloidogyne hapla.*

The present invention has been specifically explained above in accordance with the embodiments. However, the present invention is not limited thereto. The present invention also includes methods and those modified, improved, or substituted variously within a scope of the technical concept defined in claims. In Exemplary Experiments 2 to 6 of the embodiments described above, the fruiting bodies of *D. discoideum* were used as the cellular slime mold. However, according to the results of Exemplary Experiments 1 and 7, it will be understood that the secreted materials of cellular slime molds belonging to the genus D other than *D. discoideum* are also the active ingredient of the repellent for *Meloidogyne hapla.*

### INDUSTRIAL APPLICABILITY

The secreted material of the cellular slime mold used in the present invention is separated and extracted from the cellular slime mold originally existing in the nature. Therefore, it is possible to effectively repel *Meloidogyne hapla* without exerting any damage on the farm product and the living thing. The present invention makes it possible to raise the productivity in the agricultural field in the whole world while maintaining the safety of the farm product and the worker. Therefore, it is expected to provide remarkable international contribution in the agricultural field.

## Claims

1. Use of a repellent comprising, as an active ingredient, a substance secreted from a cellular slime mold belonging to a genus *Dictyostelium* for repelling root-knot nematodes.

2. The use of a repellent according to claim 1,
wherein the substance secreted from the cellular slime mold is a substance secreted from the cellular slime mold in a multicellular phase.

3. The use of a repellent according to claim 2,
wherein the cellular slime mold in the multicellular phase is in a form of fruiting body of the cellular slime mold.

4. The use of a repellent according to any one of claims 1 to 3, wherein the cellular slime mold is one selected from the group consisting of *D. discoideum, D. purpureum, D. mucoroides, D. fasciculatum, D. monochasioides, D. lacteum,* and *D. giganteum.*

5. The use of a repellent according to any one of claims 1 to 4, wherein the substance secreted from the cellular slime mold is obtained by cultivating the cellular slime mold on a medium, removing the cultivated cellular slime mold from the medium, and then extracting the substance from the medium.

6. The use of a repellent according to claim 5,
wherein the extraction from the medium is extraction with an organic solvent.

7. The use of a repellent according to claim 5,
wherein the extraction from the medium is adsorption with an adsorbent.

8. The use of a repellent according to any one of claims 1 to 4, wherein the repellent further includes the cellular slime mold.

9. A method for repelling root-knot nematodes, comprising applying a repellent comprising, as an active ingredient, a substance secreted from a cellular slime mold belonging to a genus *Dictyostelium* to an area in which any root-knot nematode exists.

## Patentansprüche

1. Verwendung eines Abwehrmittels, das als einen aktiven Wirkstoff eine Substanz aufweist, die aus einem zellulären Schleimpilz sekretiert wird, der zu einer Art *Dictyostelium* gehört, um Wurzelgallennematoden abzuwehren.

2. Verwendung eines Abwehrmittels nach Anspruch 1, wobei die Substanz, die aus dem zellulären Schleimpilz sekretiert wird, eine Substanz ist, die aus dem zellulären Schleimpilz in einer multizellulären Phase sekretiert wird.

3. Verwendung eines Abwehrmittels nach Anspruch 2, wobei der zelluläre Schleimpilz in der multizellulären Phase in Form eines Fruchtkörpers des zellulären Schleimpilzes vorliegt.

4. Verwendung eines Abwehrmittels nach einem der Ansprüche 1 bis 3, wobei der zelluläre Schleimpilz einer ist, der aus der Gruppe ausgewählt ist, die aus *D. discoideium, D. purpureum, D. mucoroides, D. fasciculatum, D. monochasioides, D. lacteum* und *D. giganteum* besteht.

5. Verwendung eines Abwehrmittels nach einem der Ansprüche 1 bis 4, wobei die Substanz, die aus dem zellulären Schleimpilz sekretiert wird, erhalten wird, indem der zelluläre Schleimpilz auf einem Medium kultiviert wird, der kultivierte zelluläre Schleimpilz von dem Medium entfernt wird, und dann die Substanz aus dem Medium extrahiert wird.

6. Verwendung eines Abwehrmittels nach Anspruch 5, wobei die Extraktion aus dem Medium eine Extraktion mit einem organischen Lösungsmittel ist.

7. Verwendung eines Abwehrmittels nach Anspruch 5, wobei die Extraktion aus dem Medium eine Adsorption mit einem Adsorptionsmittel ist.

8. Verwendung eines Abwehrmittels nach einem der Ansprüche 1 bis 4, wobei das Abwehrmittel ferner den zellulären Schleimpilz beinhaltet.

9. Verfahren zum Abwehren von Wurzelgallennematoden, aufweisend ein Aufbringen eines Abwehrmittels, das als einen aktiven Wirkstoff eine Substanz aufweist, die aus einem zellulären Schleimpilz sekretiert wird, der zu einer Art *Dictyostelium* gehört, auf einen Bereich, in dem ein Wurzelgallennematode existiert.

## Revendications

1. Utilisation d'un répulsif contenant, en tant qu'ingrédient actif, une substance secrétée à partir d'un myxomycète cellulaire appartenant à un genre *Dictyostelium* pour repousser les nématodes à galles.

2. Utilisation d'un répulsif selon la revendication 1, dans laquelle la substance secrétée à partir du myxomycète cellulaire est une substance secrétée à partir du myxomycète cellulaire dans une phase multicellulaire.

3. Utilisation d'un répulsif selon la revendication 2, dans laquelle le myxomycète cellulaire dans la phase multicellulaire est sous une forme d'organe fructifère du myxomycète cellulaire.

4. Utilisation d'un répulsif selon l'une quelconque des revendications 1 à 3, dans laquelle le myxomycète cellulaire est l'un choisi dans le groupe constitué du *D. discoideum, D. purpureum, D. mucoroides, D. fasciculatum, D. monochasioides, D. lacteum et D. giganteum.*

5. Utilisation d'un répulsif selon l'une quelconque des revendications 1 à 4, dans laquelle la substance secrétée à partir du myxomycète cellulaire est obtenue en cultivant le myxomycète cellulaire sur un milieu, en retirant le myxomycète cellulaire cultivé du milieu et puis en extrayant la substance du milieu.

6. Utilisation d'un répulsif selon la revendication 5, dans laquelle l'extraction à partir du milieu est une extraction avec un solvant organique.

7. Utilisation d'un répulsif selon la revendication 5, dans laquelle l'extraction à partir du milieu est une adsorption avec un adsorbant.

8. Utilisation d'un répulsif selon l'une quelconque des revendications 1 à 4, dans laquelle le répulsif comporte en outre le myxomycète cellulaire.

9. Procédé de répulsion de nématodes à galles, comprenant l'application d'un répulsif comprenant, en tant qu'ingrédient actif, une substance secrétée à partir d'un myxomycète cellulaire appartenant à un genre *Dictyostelium* sur une zone dans laquelle existe un quelconque nématode à galles.
